# EUROPEAN PATENT SPECIFICATION

(11) **EP 3 446 846 B1**
(45) Date of publication and mention of the grant of the patent: **14.09.2022**
(21) Application number: 18186995.9
(22) Date of filing: 02.08.2018
(51) Int. Cl.: B29C 39/10, B29C 33/00, B29C 33/30, A45D 40/16, A45D 40/20, B29C 33/40, B29L 31/00

(54) **MAKE-UP PENCIL MOLD**
FORM FÜR EINEN MAKE-UP-STIFT
MOULE DE CRAYON DE MAQUILLAGE

(30) Priority: 22.08.2017 IT 201700094966
(43) Date of publication of application: 27.02.2019
(73) Proprietor: Cosmatic S.r.l., 20876 Ornago (MB) (IT)
(72) Inventor: DEL PICCOLO, Giuseppe, 20876 Ornago (MB) (IT)
(74) Representative: Vanosi, Adelio Valeriano

(56) References cited:
- EP-A2- 1 541 372
- WO-A1-92/09220
- DE-A1- 4 445 231
- US-A1- 2015 098 746

## Description

### FIELD OF THE INVENTION

The present invention relates to a make-up pencil mold.

In particular, it refers to a mold of make-up pencils for the eyes, lips, eyelids, eyebrows, etc.

### BACKGROUND ART

In the molded make-up pencil manufacturing industry, it is customary for a make-up formula to be super-heated to a liquid consistency and poured into a casing, which ends up as the external part of the said pencil when in the use configuration.

In the prior art, one end of the casing is placed in contact with an element made of a metal material, shaped so as to contain a part of the molten make-up formula and form a pencil tip once the molten formula solidifies. The rest of the solidified make-up formula, instead, fills an elongated cavity in the make-up pencil, which is composed of the outer casing and of the solidified make-up formula, which ends up as the core of the pencil.

In the prior art, the surface finish of the pencil tip is rough, since there are often problems when the tip of the said pencil is separated from the metal element.

To improve the finish of the tip it is possible, before molding, to lubricate the metal element with a release agent. However, this creates problems because the tip of the pencil, after molding, is contaminated with the lubricant used for the separation.

Furthermore, the lubrication of the metal element requires a further processing step which is laborious and expensive (also due to the purchase of the lubricant) and lengthens production times.

Furthermore, the metal element has a different thermal conductivity from that of the casing, which is usually made of plastic or wood. Therefore, the molded make-up formula cools more quickly at the tip with respect to the part of the core contained within the casing.

This creates thermal contractions in the molded formula which can lead to uneven filling, partial gaps, or cracks in the solidified molded formula.

WO 92/09220-A1, EP 1541372-A2, DE 4445231-A1 and US2015/098746-A1 describe known methods for producing pencils.

### SUMMARY OF THE INVENTION

An object of the present invention is to provide a make-up pencil mold and a molding method which is improved compared with the prior art.

A further object of the invention is to provide a mold which does not need to be lubricated prior to a molding stage.

This and other objects are achieved by means of a mold and a method according to the technical teachings of the claims annexed hereto.

Advantageously, the mold provides easier extraction of the molded make-up pencil, with less risk of generating imperfections in the finish of the tip.

Moreover, the present mold minimises the risks of uneven molding caused by the cooling and solidification stage.

### BRIEF DESCRIPTION OF THE FIGURES

Further characteristics and advantages of the invention will become clearer in the description of a preferred but not exclusive embodiment of the device and method, illustrated - by way of a non-limiting example - in the drawings annexed hereto, in which:
Figure 1 is a plan view of a semi-automatic machine for manufacturing make-up pencils;
Figure 2 is a simplified detail view of a part of the machine in Figure 1, which shows in particular a make-up pencil mold into which a casing has already been inserted, ready to receive the molten make-up formula;
Figure 3 is a simplified sectional view of the mold in Figure 2;
Figure 4 is a sectional view of a detail of the mold in Figure 2;
Figures 5A, 5B and 5C show some stages in a sequence for the manufacturing of a make-up pencil produced using the mold in Figure 2; and
Figures 6 and 7 show the mold in Figure 2 used for make-up pencils with casings with different diameters.

### DETAILED DESCRIPTION OF THE INVENTION

With reference to the figures stated, reference number 1 is used to denote, as a whole, a make-up pencil mold.

The mold 1 for make-up pencils 3 comprises a tubular body 2 associated, at one of end thereof (or a bottom 2A), with a cup-shaped element 4. The cup-shaped element 4 may be inserted into the tubular body 2 which, at one end thereof, may have a step 11 which couples with a flange 10 on the said cup-shaped element 4.

A reducer 5 may be inserted into the tubular body 2. The reducer may have an external diameter sized so as to allow centring with respect to the tubular body 2, and an internal diameter sized so as to allow centring (with a coupling which is movable by hand) with a make-up pencil casing 6.

When the reducer 5 is inserted into the tubular body 2, the resulting assembly is movable by hand. The reducer 5 may be locked to the tubular body 2 by means of a grub screw (not shown), fitted into a threaded hole 31, which can engage with a groove 30, which also facilitates removal of the reducer 5.

The reducer 5 may feature a chamber 32 which houses an o-ring (not shown). The presence of the ring stabilises the casing 6 inside the reducer 5, making the extraction and insertion thereof subject to light friction. This light friction stabilises the casing 6, thus limiting the movement thereof during the molding of the make-up formula.

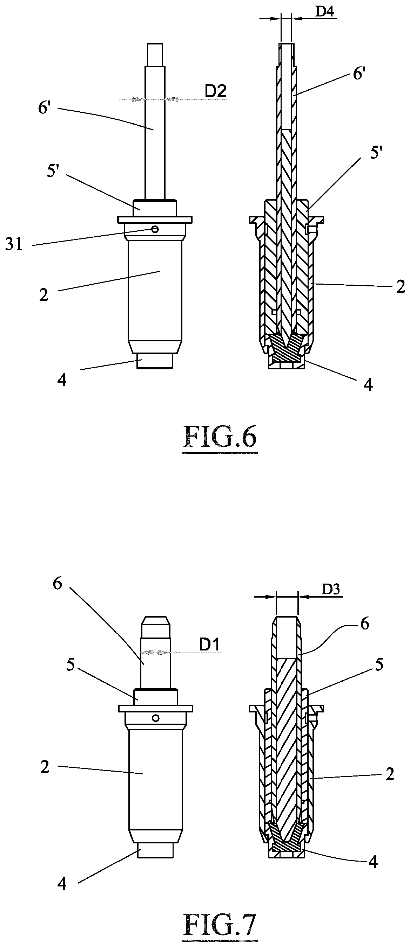

The reducer 5 has the function of allowing the use of the mold for make-up pencils with casings 6 with different diameters and lengths. The utility of the reducer is easily understood upon examination of Figures 6 and 7. In Figure 7, a mold 1 is shown containing a pencil with an external diameter D1 (and therefore with a casing 6 with an external diameter slightly greater than D1). The casing 6 has a through cavity 6A and preferably a cylindrical section, with a diameter D3, in which the molding of a make-up formula takes place, the said formula, once solidified, becoming the core of the make-up pencil.

In Figure 6, meanwhile, the external diameter of the pencil (and therefore of the casing 6') is D2 < D1. The pencil is also longer and has a different internal diameter D4 of the cylindrical cavity 6A. Essentially, the reducer 5' has an inner diameter which allows the casing 6' to be coupled to the said tubular body 2 used for molding the pencils with diameter D1.

Obviously, in the present text, only two diameters are described to exemplify the pencils, but - with the use of an appropriate reducer 5, 5' - the system according to the present invention may be used to make pencils with external diameters (and lengths) which are also very different from one another.

Between the reducer 5 and the casing 6, advantageously, a centering tolerance is provided, with a hand-movable coupling, with which the presence of an o-ring (or other similar means) may be associated, which creates a light friction between the casing 6 and the reducer 5.

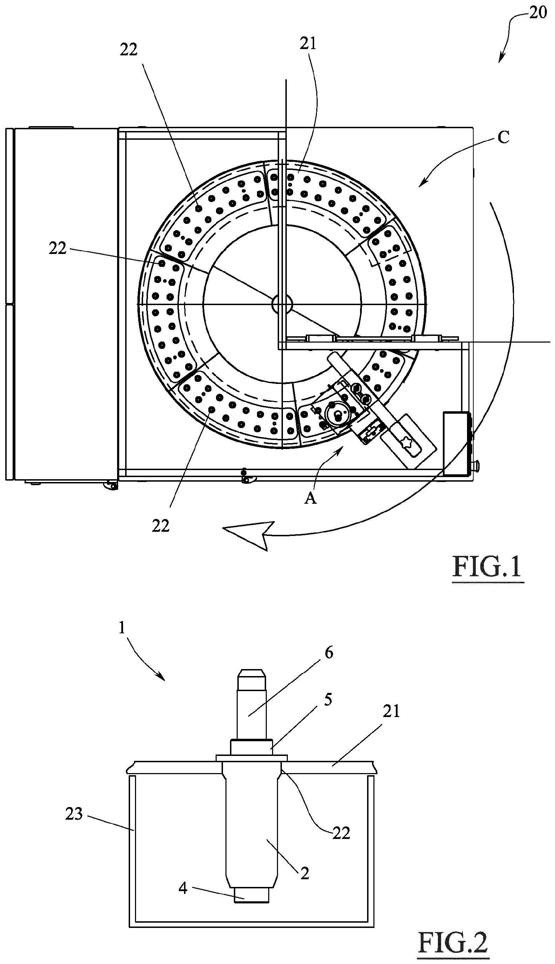

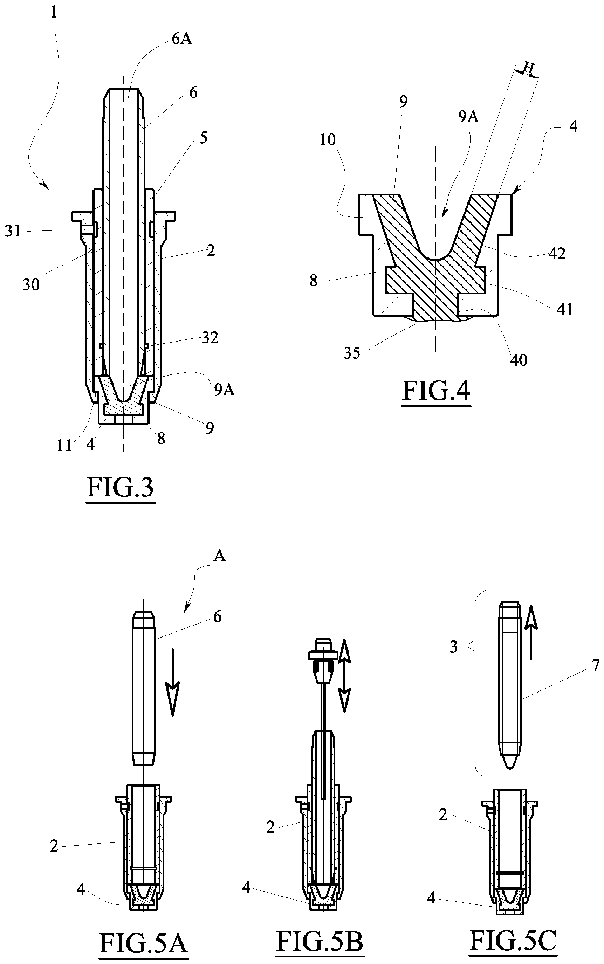

This allows the empty casings to be hand-loaded into the reducers, and the make-up pencils to be extracted (again, by hand) once molding is complete and the make-up formula poured into the pencils has solidified (Figures 5A and 5C). This stage takes place in a specific station in the machine in Figure 1, namely the loading/unloading station denoted with letter C.

Going back to the description of the mold 1, with particular reference to Figure 3, note that the casing 6 is endowed with a through cavity 6A designed to contain, at least partially, a make-up formula 7 poured thereinto.

When the casing 6 is inserted into the reducer 5, is sealingly coupled with the cup-shaped element 4.

According to the present invention, the cup-shaped element 4 comprises an (external) support structure 8 made of a rigid material, connected to a casting structure 9 made of silicone. The casting structure 9 features a molding cavity 9A configured so as to contain the fluid makeup formula (together with that present in the cavity 6A of the casing) in order to form a tip on the makeup pencil once the make-up formula has solidified.

The cup-shaped element 4 placed on the bottom 2A of the tubular element is, therefore, formed of two parts. Preferably, the casting structure 9, made of silicone, is secured to the supporting structure 8 in undercut manner.

Advantageously, the supporting structure 8 features, on the bottom thereof, at least one through hole (or other type of opening) filled with some of the silicone forming the casting structure 9, which protrudes, with a mushroom-head shape 35, from the outer surface of the supporting structure 8 (see Figure 4).

The production of a cup-shaped element 4 thus configured is extremely simple. Indeed, the supporting structure 8 is arranged upside down with respect to that shown in Figure 4, and is associated with a mold endowed with a protuberance having the final configuration of the desired make-up pencil tip. Liquid silicone is then poured into the hole 40, and the cup-shaped element is left upside down until the silicon cures and, therefore, assumes a dimensionally stable conformation.

As can be seen, again in Figure 4, the supporting structure 8 comprises an internal surface 42 with an at least partially conical configuration, on top of which the silicone lies, in the molding cavity 9A.

More specifically, the silicone surrounds and defines the molding cavity 9A with a substantially constant thickness, thereby rendering the solidification of the pencil tip uniform.

When solidified, the silicone fills an undercut 41 in the supporting structure 8, and in this way the casting structure 9 is firmly secured to the supporting structure 8. The optional presence of silicone shaped like a mushroom head 35 and the presence thereof inside the hole 40, further improves adhesion between the casting structure 9 and the supporting structure 8.

Obviously, the bond between the supporting structure and the casting structure may be achieved by other methods (such as gluing, etc.) which are suitable to guarantee a stable bond between the two structures.

As can be seen in Figure 3, in one use configuration, the cup-shaped element 4 is sandwiched between the tubular body 2 (or rather a step 11 thereon) and the reducer 5, which presses on the said flange 10. Advantageously, the reducer couples with at least part of the cup-shaped element 4's supporting structure, which is essentially rigid and therefore provides the cup-shaped element 4 with good stability.

Again, in a use configuration, the casing 6 is resting, meanwhile, at one end thereof, preferably solely on the cup-shaped element's casting structure 9. In this way, it is possible to obtain a seal between the casing and the casting structure, which is achieved by coupling the more rigid material constituting the casing (wood or plastic, generally) and the softer material (silicone) which forms the casting structure 9.

The mold 1 may be used effectively in a semi-automatic machine for molding make-up pencils, such as the one illustrated schematically in Figure 1.

The machine may comprise a plate 21 which is movable between at least two operating stations A, C, a first operating station for casting A and a second operating station C for loading the casings 6 and/or unloading the make-up pencils 7. Obviously, the loading and unloading stations may also be featured in different positions in the apparatus, especially in systems larger than the one illustrated.

In the embodiment shown, the mobile plate 21 is a rotating carousel with an essentially circular configuration. However, it can assume any other configuration useful for conveying the molds between the various stations. For example, it may simply be a shifting plate, or a shifting plate with two parallel portions interconnected by two curved arches.

The mobile plate 21 features a plurality of holes 22 (in the example the holes are aligned radially, two by two, i.e. arranged around an external circumference and an internal one).

Each hole 22 is configured to contain a mold 1, and more specifically, to permanently house (securing) the tubular body 2. Advantageously, the tubular body is sandwiched between the movable plate and a perforated plate anchored to the movable plate 21 by means of magnets.

Below the movable plate 21, there is a system featured for cooling at least the tubular body 2 and the cup-shaped element 4.

The cooling system may feature a cooling duct 23, whose interior is facing at least one part of the tubular body 2 and at least one part of the cup-shaped element 4.

Advantageously, the plate 21 may form a wall of the said duct 23. In this way, cold air (for example measuring -15°, but the temperature thereof depends on the make-up formula) flowing inside the duct 23 can cool the molds 1 and, consequently, the make-up formula therein, so as to solidify the said formula.

The operation of the machine 20 is clear to a person skilled in the art and is essentially as follows.

Preliminarily, a cup-shaped element 4 is inserted inside each tubular element 2 and the said cup-shaped element 4 is then secured by means of the reducer 5, which is suitable to house the casing 6 with the diameter of the pencil to be produced.

It is worth noting that the 'size changeover' step is extremely simple in this configuration, wherein it is simply envisaged that the cup-shaped element 4 and the most suitable reducer 6 for the shape of the pencil to be produced are inserted in each tubular body 2.

Once configured, the machine proceeds by loading (Figure 5A) the casings 6 for the pencils to be formed into the 5 empty reducers present in (loading) station C.

A moderate rotation of the plate 21 conveys the empty casings 6 to the filling station A, where there is a dispenser equipped with movable U-shaped nozzles. In the machine disclosed there are two nozzles present, a first of which is dedicated to filling the molds on the external circumference, and a second dedicated to those on the internal circumference.

The nozzle is automatically lowered, as shown in Figure 5B, and fills the cavity 6A, in the casing 6 underneath, with the fluid cosmetic formula (for example, measuring 70/80°C, but the temperature depends on the make-up formula to be molded). Advantageously, the nozzle gradually rises as the fluid cosmetic formula is dispensed (filling, therefore, the cavity).

After the filling stage, the nozzles rise above the cavity 6A, thus releasing the casings which, by means of the movable plate 21, move along into the cooling zone (immediately downstream from the molding station A).

In this way, the just-filled molds are moved (moving step by step as a result of the movement of the plate 21) into the cooling duct 23 which, in the solution shown, extends along approximately 2/3 of the circumference of the plate 21.

Upon reaching near the end of the cooling duct 23, at station C, the casings inside which the cosmetic formula has now solidified are extracted (see Figure 5C), for example manually, from the reducers 5, which are then ready to receive a new casing 6.

The make-up pencils 7 are therefore almost ready and, to finish the processing, the assembly of a cap may be envisaged (positioned at the opposite end of the core to the tip), as well as a lid to cover the tip of the core, and possibly a further cooling stage, at room temperature.

It is worth noting that the particular construction of the cup-shaped element 4, which determines the shape of the pencil tip, makes extraction of the pencil extremely easy. Indeed, the pencil tip does not remain attached to the silicone forming the casting structure 9, and therefore extraction of the pencil is extremely easy and the finishing of the pencil tip is of superior quality.

The silicone casting structure allows the pencil tip of the pencil to be separated therefrom even without the use of lubricants, and improves the make-up formula cooling and solidification stage, since the thermal conductivity of silicone is more similar to that of the casing 6.

Advantageously, the height H of the part made of silicone may furthermore be balanced precisely to obtain a thermal conductivity of the said part as similar as possible to that of the casing 6, which is advantageous in terms of uniform solidification of the molded cosmetic formula.

The present invention also relates to a make-up pencil molding method comprising a casing and a core consisting of a molded, solidified cosmetic formula.

The method may comprise the steps of providing a make-up pencil casing 6 and placing an end thereof in contact with a silicone casting structure 9 which is part of a cup-shaped element 4, the latter furthermore comprising a supporting structure 8 made of a more rigid material than the silicon.

The casting structure 9, made of silicone, is secured to the supporting structure 8, preferably in an undercut manner.

The casting structure 9 features a shaped cavity 9A configured so as to contain the liquid makeup formula poured into the cavity 6A of the casing 6 in order to form a tip on the makeup pencil once the make-up formula has solidified following cooling.

To end the description, it must be stressed that the casing 6 of the pencils may be made of wood, plastic, metal etc.

The silicone used to make the casting structure 9 may be of the standard type used for cosmetic formula molds.

The support structure 8, meanwhile, is preferably made of metal. Suitable formulas are, for example, aluminium and/or Anticorodal.

The reducer 5, meanwhile, may be made of aluminium and/or Anticorodal.

The mobile plate 21 is normally made of stainless steel for cosmetic use.

The tubular body 2, meanwhile, may be made of aluminium and/or Anticorodal.

The invention also relates to a machine for forming make-up pencils through the make-up pencil mold 1 described above, comprising a movable plate 21 between at least two operating positions A, C, a first operating position of casting A and a second operating position of load C of the casings 6, the movable plate 21 having a plurality of holes 22 in which the tubular bodies 2 of the molds 1 are inserted, below the movable plate 21 being provided a cooling duct 23 whose interior is directly facing at least one part of the tubular body 2 and at least one part of the cup-shaped element 4.

Preferably, the movable plate 21 defines a wall of said cooling duct 23.

The invention also relates to a method of casting a make-up pencil 7 with the mould described above, comprising the steps of arranging the casing 6 of a make-up pencil and placing an end of the casing 6 in contact with the casting structure 9 in silicone of the cup-shaped element 4, the cup shaped element 4 comprising the support structure 8 to which the silicone casting structure 9 is constrained, the casting structure 9 having the shaped cavity 9A configured to contain the liquid make-up product poured into the cavity of the casing 6 so as to form a tip of the make-up pencil once the make-up product has solidified after cooling.

Various embodiments of the innovation have been disclosed herein, but further embodiments may also be conceived.

## Claims

1. Make-up pencil mold (1) comprising a tubular body (2) associated with a cup-shaped element (4) at a bottom thereof (2A), a reducer (5) inserted inside of the tubular body (2), and a casing (6) of a make-up pencil having a through cavity (6A) configured to contain at least partially a cast make-up pencil (7), the casing (6) being inserted inside the reducer (5) and being sealedly coupled to the cup-shaped element (4), the cup-shaped element (4) comprising a support structure (8) made of rigid material, bound to a casting structure (9) made of silicone, the casting structure (9) having a shaped cavity (9A) configured to contain the cast make-up product so as to form a tip of the make-up pencil once the make-up product has solidified.

2. The mold of claim 1, wherein the casting structure (9) of the cup-shaped element (4) is bound to the support structure (8) in undercut manner.

3. The mold of claim 1, wherein the supporting structure (8) has a through hole in its bottom, filled by a part of the silicone forming the casting structure (9) and which protrudes with a mushroom-head shape on the outer surface of the mold support structure (8).

4. The mold of Claim 1, in which the support structure comprises an at least partially conical inner surface, on which the casting structure (9) is laid.

5. The mold of the preceding claim, wherein the casting structure (9) has at least a portion of the inner surface, with a quantity of silicone having constant height(H).

6. The mold of claim 1, wherein between the reducer (5) and the casing (6) there is provided centering tolerance with a coupling hand-movable.

7. The mold of claim 1, wherein the cup-shaped element (4) has a flange (10) resting on a step (11) of the tubular body (2), and / or wherein the cup-shaped element (4) is sandwich-blocked between the tubular body (2) and the reducer (5), via said flange (10).

8. The mold of claim 1, wherein the casing (6) rests, at one end thereof, only on the casting structure (9) of the cup-shaped element.

9. Machine for forming make-up pencils through a make-up pencil mold (1) according to one or more of claims 1-8, comprising a movable plate (21) between at least two operating positions (A, C), a first operating position of casting (A) and a second operating position of load (C) of the casings (6), the movable plate (21) having a plurality of holes (22) in which the tubular bodies (2) of the molds (1) are inserted, below the movable plate (21) being provided a cooling duct (23) whose interior is directly facing at least one part of the tubular body (2) and at least one part of the cup-shaped element (4).

10. Machine according to the preceding claim, wherein the movable plate (21) defines a wall of said cooling duct (23).

11. Method of casting a make-up pencil (7) with the mould of claim 1, comprising the steps of arranging the casing (6) of a make-up pencil and placing an end of the casing (6) in contact with the casting structure (9) in silicone of the cup-shaped element (4), the cup shaped element (4) comprising the support structure (8) to which the silicone casting structure (9) is constrained, the casting structure (9) having the shaped cavity (9A) configured to contain the liquid make-up product poured into the cavity of the casing (6) so as to form a tip of the make-up pencil once the make-up product has solidified after cooling.

## Patentansprüche

1. Form (1) für einen Make-up-Stift, umfassend einen röhrenförmigen Körper (2), der mit einem becherförmigen Element (4) an einem Boden davon (2A) verbunden ist, ein Reduzierstück (5), das in das Innere des röhrenförmigen Körpers (2) eingesetzt ist, und ein Gehäuse (6) eines Make-up-Stifts, das einen Durchgangshohlraum (6A) aufweist, der dazu konfiguriert ist, mindestens teilweise einen gegossenen Make-up-Stift (7) aufzunehmen, wobei das Gehäuse (6) in das Innere des Reduzierstücks (5) eingesetzt ist und abdichtend mit dem becherförmigen Element (4) gekoppelt ist, wobei das becherförmige Element (4) eine Stützstruktur (8) umfasst, die aus starrem Material hergestellt ist und die an eine Gussstruktur (9) gebunden ist, die aus Silikon hergestellt ist, wobei die Gussstruktur (9) einen geformten Hohlraum (9A) aufweist, der dazu konfiguriert ist, das gegossene Make-up-Produkt aufzunehmen, um eine Spitze des Make-up-Stifts auszubilden, sobald das Make-up-Produkt erstarrt ist.

2. Form nach Anspruch 1, wobei die Gussstruktur (9) des becherförmigen Elements (4) hinterschnitten an die Stützstruktur (8) gebunden ist.

3. Form nach Anspruch 1, wobei die Stützstruktur (8) in ihrem Boden ein Durchgangsloch aufweist, das von einem Teil des die Gussstruktur (9) bildenden Silikons ausgefüllt ist und das pilzkopfförmig an der Außenfläche der Formstützstruktur (8) vorsteht.

4. Form nach Anspruch 1, bei der die Stützstruktur eine mindestens teilweise konische Innenfläche umfasst, auf die die Gussstruktur (9) gelegt wird.

5. Form nach dem vorhergehenden Anspruch, wobei die Gussstruktur (9) mindestens einen Teil der Innenfläche aufweist, wobei eine Silikonmenge eine konstante Höhe (H) aufweist.

6. Form nach Anspruch 1, wobei zwischen dem Reduzierstück (5) und dem Gehäuse (6) eine Zentriertoleranz mit einer von Hand bewegbaren Kupplung bereitgestellt ist.

7. Form nach Anspruch 1, wobei das becherförmige Element (4) einen Flansch (10) aufweist, der auf einer Stufe (11) des röhrenförmigen Körpers (2) aufliegt, und/oder wobei das becherförmige Element (4) sandwichartig zwischen dem röhrenförmigen Körper (2) und dem Reduzierstück (5) über den Flansch (10) eingeklemmt ist.

8. Form nach Anspruch 1, wobei das Gehäuse (6) an einem Ende davon, nur auf der Gussstruktur (9) des becherförmigen Elements aufliegt.

9. Maschine zum Formen von Make-up-Stiften mittels einer Form (1) für einen Make-up-Stift nach einem oder mehreren der Ansprüche 1-8, umfassend eine Platte (21), die zwischen mindestens zwei Betriebspositionen (A, C) bewegbar ist, einer ersten Betriebsposition des Gießens (A) und einer zweiten Betriebsposition des Ladens (C) der Gehäuse (6), wobei die bewegbare Platte (21) eine Vielzahl von Löchern (22) aufweist, in die die röhrenförmigen Körper (2) der Formen (1) eingesetzt sind, wobei unterhalb der beweglichen Platte (21) ein Kühlkanal (23) bereitgestellt ist, dessen Innenraum mindestens einem Teil des röhrenförmigen Körpers (2) und mindestens einem Teil des becherförmigen Elements (4) direkt zugewandt ist.

10. Maschine nach dem vorhergehenden Anspruch, wobei die bewegliche Platte (21) eine Wand des Kühlkanals (23) definiert.

11. Verfahren zum Gießen eines Make-up-Stifts (7) mit der Form nach Anspruch 1, umfassend die Schritte eines Anordnens des Gehäuses (6) eines Make-up-Stifts und Platzierens eines Endes des Gehäuses (6) in Kontakt mit der Silikon-Gussstruktur (9) des becherförmigen Elements (4), wobei das becherförmige Element (4) die Stützstruktur (8) umfasst, an der die Silikongussstruktur (9) gehalten wird, wobei die Gussstruktur (9) den geformten Hohlraum (9A) aufweist, der dazu konfiguriert ist, das flüssige Make-up-Produkt aufzunehmen, das in den Hohlraum des Gehäuses (6) gegossen wird, um eine Spitze des Make-up-Stifts auszubilden, sobald das Make-up-Produkt nach dem Abkühlen erstarrt ist.

## Revendications

1. Moule de crayons de maquillage (1) comprenant un corps tubulaire (2) associé à un élément en forme de coupelle (4) au niveau de son fond (2A), un réducteur (5) inséré à l'intérieur du corps tubulaire (2), et un boîtier (6) d'un crayon de maquillage possédant une cavité traversante (6A) conçue pour contenir au moins partiellement un crayon de maquillage coulé (7), le boîtier (6) étant inséré à l'intérieur du réducteur (5) et étant couplé de manière étanche à l'élément en forme de coupelle (4), l'élément en forme de coupelle (4) comprenant une structure de support (8) constituée de matériau rigide, liée à une structure de moulage (9) constituée de silicone, la structure de moulage (9) comportant une cavité façonnée (9A) conçue pour contenir le produit de maquillage coulé de façon à former une pointe du crayon de maquillage une fois que le produit de maquillage a solidifié.

2. Moule selon la revendication 1, ladite structure de moulage (9) de l'élément en forme de coupelle (4) étant liée à la structure de support (8) à la manière d'une contre-dépouille.

3. Moule selon la revendication 1, ladite structure de support (8) comportant un trou traversant dans son fond, rempli par une partie du silicone formant la structure de moulage (9) et qui fait saillie avec une forme de tête de champignon sur la surface externe de la structure de support de moule (8).

4. Moule selon la revendication 1, dans lequel la structure de support comprend une surface interne au moins partiellement conique, sur laquelle la structure de moulage (9) est posée.

5. Moule selon la revendication précédente, ladite structure de moulage (9) possédant au moins une partie de la surface interne, avec une quantité de silicone possédant une hauteur constante (H).

6. Moule selon la revendication 1, entre le réducteur (5) et le boîtier (6) une tolérance de centrage avec un accouplement mobile à la main étant prévue.

7. Moule selon la revendication 1, ledit élément en forme de coupelle (4) comportant une bride (10) reposant sur une marche (11) du corps tubulaire (2), et/ou ledit élément en forme de coupelle (4) étant bloqué en étant intercalé entre le corps tubulaire (2) et le réducteur (5), par l'intermédiaire de ladite bride (10).

8. Moule selon la revendication 1, ledit boîtier (6) reposant, au niveau d'une extrémité de celui-ci, uniquement sur la structure de moulage (9) de l'élément en forme de coupelle.

9. Machine destinée à former des crayons de maquillage par l'intermédiaire d'un moule de crayon de maquillage (1) selon une ou plusieurs des revendications 1 à 8, comprenant une plaque mobile (21) entre au moins deux positions de fonctionnement (A, C), une première position de fonctionnement de moulage (A) et une seconde position de fonctionnement de charge (C) des boîtiers (6), la plaque mobile (21) comportant une pluralité de trous (22) dans lesquels les corps tubulaires (2) des moules (1) sont insérés, en dessous de la plaque mobile (21) étant prévu un conduit de refroidissement (23) dont l'intérieur fait directement face à au moins une partie du corps tubulaire (2) et au moins une partie de l'élément en forme de coupelle (4).

10. Machine selon la revendication précédente, ladite plaque mobile (21) définissant une paroi dudit conduit de refroidissement (23).

11. Procédé de moulage d'un crayon de maquillage (7) avec le moule de la revendication 1, comprenant les étapes d'agencement du boîtier (6) d'un crayon de maquillage et de placement d'une extrémité du boîtier (6) en contact avec la structure de moulage (9) en silicone de l'élément en forme de coupelle (4), l'élément en forme de coupelle (4) comprenant la structure de support (8) sur laquelle la structure de moulage en silicone (9) est contrainte, la structure de moulage (9) comportant la cavité façonnée (9A) conçue pour contenir le produit de maquillage liquide versé dans la cavité du boîtier (6) de façon à former une pointe du crayon de maquillage une fois que le produit de maquillage a solidifié après refroidissement.
